(19) Europäisches Patentamt / European Patent Office / Office européen des brevets

(11) **EP 2 549 343 A1**

(12) **DEMANDE DE BREVET EUROPEEN**

(43) Date de publication:
**23.01.2013 Bulletin 2013/04**

(51) Int Cl.:
**G05B 13/04** *(2006.01)*

(21) Numéro de dépôt: **11290333.1**

(22) Date de dépôt: **20.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Alstom Technology Ltd.**
**5400 Baden (CH)**

(72) Inventeurs:
• **Hissel, Anne-Marie**
  **90018 Belfort (FR)**
• **Larminat, Philipe de**
  **44000 Nantes (FR)**

(54) **Procédé de régulation**

(57) L'invention concerne un procédé de régulation automatique d'un système dans lequel on mesure plusieurs paramètres caractéristiques du système et dans lequel on applique au moins un paramètre de commande (u) en fonction des paramètres mesurés (y),
caractérisé en ce que:
- un point de fonctionnement nominal du système est choisi,
- un modèle nominal (Mn) décrivant le système en ce point de fonctionnement nominal est déterminé, des paramètres caractéristiques estimatifs de sortie ($y_r$) correspondant à des paramètres caractéristiques mesurables (y) sont déterminés à partir dudit modèle nominal,
- les écarts entre au moins un des paramètres caractéristiques de sortie mesurés (y) et au moins un des paramètres caractéristiques estimatifs de sortie ($y_r$) sont déterminés, et
- on applique au moins un paramètre de commande du système en fonction des écarts déterminés pour diminuer l'écart entre au moins un des paramètres caractéristiques estimatifs de sortie ($y_r$) et la au moins une valeur mesurée des paramètres caractéristiques mesurés de sortie (y) correspondante.

FIG. 2

**Description**

L'invention concerne un procédé de régulation d'un système automatique, applicable en particulier à un dispositif de régulation de la tension statorique d'un générateur de courant alternatif.

Les générateurs de courant alternatifs, en particulier de grande puissance (plusieurs centaines de méga-Watts MW), sont reliés à des réseaux électriques de distribution dont la demande varie grandement.

Ces générateurs sont soumis à des perturbations variées de nature et d'amplitude très différentes : court-circuit, chutes de tension, variation de la charge, îlotage etc. Dans tous les cas de figure, et sur tout le domaine de fonctionnement, des performances aussi proches que possible de l'optimum sont attendues. Les boucles fermées doivent aussi présenter des marges de stabilité suffisantes.

Les procédés de régulation utilisés actuellement, en particulier pour les alternateurs de grande puissance des centrales nucléaires, reposent sur le principe du régulateur dit à quatre-boucles, dans lequel des boucles de contre réaction (feedback, FBK) sont utilisées pour maintenir les valeurs en sortie au plus près d'une valeur de référence à l'aide notamment d'une commande sur un certain nombres de paramètres contrôlables.

Ces procédés reposent sur des technologies analogiques, sont très sensibles aux erreurs de mesure et sont relativement peu à même d'assurer la stabilité des boucles fermées sur un domaine large. En particulier, ces procédés à boucles fermées engendrent des oscillations qui ne sont que difficilement et souvent peu amorties.

Plus particulièrement, ces procédés de régulation et les régulateurs les appliquant ne parviennent pas à satisfaire les cahiers de spécifications techniques de fournisseurs d'électricité relatifs aux équipements d'excitation et de réglage de tension des alternateurs de grande puissance des centrales nucléaires sur l'ensemble du domaine d'utilisation.

Afin de pallier au moins partiellement aux défauts précédemment mentionnes, l'invention a pour objet un procédé de régulation automatique d'un système dans lequel on mesure plusieurs paramètres caractéristiques du système et dans lequel on applique au moins un paramètre de commande en fonction des paramètres mesurés, caractérisé en ce que :

- un point de fonctionnement nominal du système est choisi,
- un modèle nominal décrivant le système en ce point de fonctionnement nominal est déterminé,
- on détermine un jeu de modèles représentatif des variations possibles par rapport au modèle nominal,
- des paramètres caractéristiques estimatifs correspondant à des paramètres caractéristiques mesurables sont déterminés à partir dudit modèle nominal,
- les écarts entre au moins un des paramètres caractéristiques mesurés de sortie et au moins un des paramètres caractéristiques estimatifs de sortie sont déterminés, et
- on applique au moins un paramètre de commande du système en fonction des écarts déterminés pour diminuer l'écart entre au moins un des paramètres caractéristiques estimatifs de sortie et la au moins une valeur mesurée des paramètres caractéristiques mesurés de sortie correspondante.

Le procédé ainsi obtenu n'utilise pas d'estimateur pour obtenir ses valeurs de référence, ce qui le rend moins sensible aux incertitudes paramétriques sur les grandeurs non-mesurables relatives notamment à l'état du système.

Le procédé peut en outre présenter une ou plusieurs des caractéristiques suivantes, prises seules ou en combinaison.

Le modèle nominal est une approximation de la fonction de transfert idéale du système.

Le modèle nominal est la linéarisation de la fonction de transfert idéale du système autour d'un point de fonctionnement.

Ledit au moins un paramètre de commande du système appliqué en fonction des écarts déterminés pour diminuer l'écart entre les paramètres caractéristiques estimatifs de sortie et les paramètres caractéristiques mesurés de sortie est déterminé par un retour optimal portant sur un système augmenté dérivé du système initial par ajout de l'intégrale sur au moins un paramètre de sortie prédéterminé mesurable.

Le paramètre de commande du système appliqué est déterminé par optimisation d'un critère intégral.

Le paramètre de commande du système appliqué est déterminé par la méthode de commande optimale Linéaire Quadratique Gaussienne (LQG).

Il comporte en outre les étapes :

- on effectue une paramétrisation de l'écart au modèle nominal du système par décomposition sur l'ensemble des écarts entre les modèles du jeu de modèles représentatif des variations possibles et le modèle nominal,
- on minimise un critère d'optimisation donné en variant au moins un des paramètres de l'écart au modèle nominal du système précédemment obtenus.

Il comporte en outre une étape supplémentaire d'optimisation de la commande à écart au modèle nominal fixé par détermination d'au moins un gain de rétroaction.

Les étapes de minimisation du critère d'optimisation en variant les paramètres de l'écart au modèle nominal du système et d'optimisation de la commande à écart au modèle nominal fixé par détermination d'au moins un gain de rétroaction sont répétées successivement dans une boucle itérative.

Il comporte une étape supplémentaire d'intégration de la différence entre la commande et sa valeur saturée, et en ce que le au moins un paramètre de commande du système en fonction des écarts déterminés pour diminuer l'écart entre les paramètres caractéristiques estimatifs et les valeurs mesurées des paramètres caractéristiques mesurables est déterminé en tenant compte de l'intégrale de la différence entre le paramètre de commande et sa valeur saturée.

Le système comporte un alternateur de centrale de production d'électricité raccordé à un réseau électrique et son excitatrice.

L'état du système est représenté par un vecteur d'état qui comporte la tension statorique, la vitesse de rotation du rotor, l'angle total et une image du flux dans l'excitatrice.

Le jeu de grandeurs de sortie comporte la tension stator, la vitesse de rotation du rotor, la puissance active et une valeur approchée de la puissance mécanique modélisant une perturbation principale.

Ledit au moins un paramètre de commande appliqué comporte une valeur approchée de la puissance mécanique modélisant la perturbation principale et la tension de commande de l'excitation.

Un autre objet de l'invention est le dispositif de régulation automatique d'un système associé, dans lequel on mesure plusieurs paramètres caractéristiques du système et dans lequel on applique au moins un paramètre de commande en fonction des paramètres mesurés,

caractérisé en ce qu'il comporte des moyens configurés pour :

- choisir un point de fonctionnement nominal du système,
- déterminer un modèle nominal décrivant le système en ce point de fonctionnement nominal,
- déterminer des paramètres caractéristiques estimatifs correspondant à des paramètres caractéristiques mesurables sont déterminés à partir dudit modèle nominal,
- déterminer les écarts entre les paramètres caractéristiques mesurés et les paramètres caractéristiques estimatifs, et
- appliquer au moins un paramètre de commande du système en fonction des écarts déterminés pour diminuer l'écart entre les paramètres caractéristiques estimatifs de sortie et les valeurs mesurées des paramètres caractéristiques de sortie mesurables.

D'autres caractéristiques et avantages apparaîtront à la lecture de la description des figures suivantes, parmi lesquelles :

- la figure 1 est un schéma reprenant sous forme d'organigramme les étapes d'un mode de réalisation du procédé,
- la figure 2 est un schéma-bloc représentant un mode de réalisation du modèle dit nominal du système,
- la figure 3 est un schéma-bloc représentant un mode de réalisation de la fonction prédictive dite « feedforward » selon l'invention,
- la figure 4 est un schéma-bloc représentant un mode de réalisation du modèle dit de conception du système en rétroaction,
- la figure 5 est un schéma-bloc représentant le système augmenté utilisé pour la désensibilisation selon un mode de réalisation de l'invention,
- la figure 6 est un schéma-bloc représentant une seconde version simplifiée du système augmenté de la figure 5,
- la figure 7 est un schéma fonctionnel représentant un mode de réalisation comprenant la fonction prédictive, la rétroaction, la désensibilisation et la prise en compte de la saturation de la commande.

Sur toutes les figures les mêmes références se rapportent aux mêmes éléments.

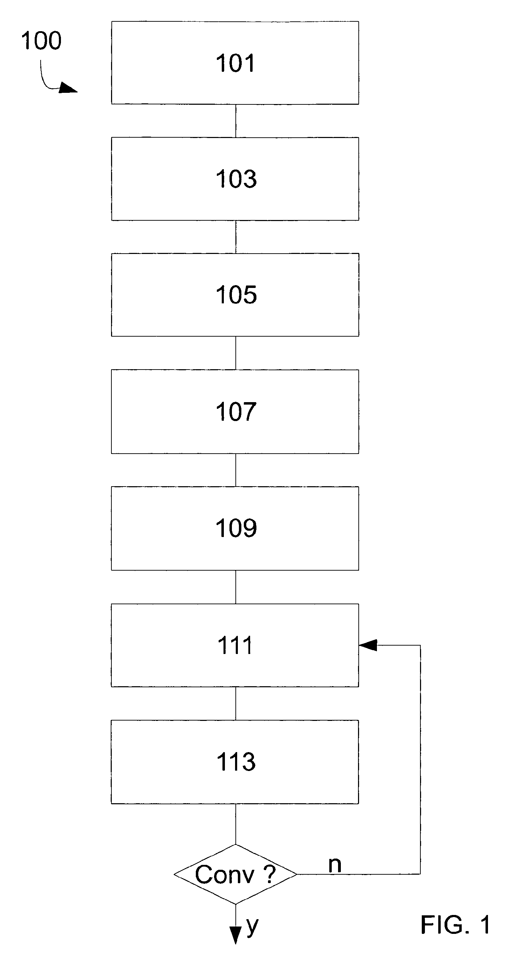

L'invention concerne un procédé de régulation automatique d'un système. La figure 1 montre les différentes étapes du procédé 100 permettant d'aboutir à la régulation du système. En particulier, le procédé est utilisé dans le cas d'un alternateur couplé à un réseau électrique. L'objectif est d'appliquer la tension d'excitation à l'alternateur permettant d'assurer la stabilité de l'alternateur tout en suivant une tension de consigne. Cette tension de consigne est établie de sorte à suivre la demande du réseau auquel est connecté l'alternateur.

L'alternateur est par exemple de type turboalternateur. Il comprend un rotor mis en mouvement par une turbine reliée au réacteur, et un stator. Le stator est amené à une certaine tension dite statorique Vs.

La première étape 101 du procédé 100 est la sélection d'un modèle nominal Mn, ce modèle peut notamment être le modèle de conception le plus simple, linéaire et invariant. Ce modèle nominal peut en particulier être la linéarisation de la fonction de transfert en un point de fonctionnement prédéterminé, celui auquel est censé se trouver le système.

Le procédé est modélisé autour du point de fonctionnement par le jeu d'équations suivant :

EP 2 549 343 A1

$$\begin{cases} \dot{x} = Am \cdot x + Bm \cdot u_m \\ y = Cm \cdot x + Dm \cdot u_m \end{cases}$$

Avec :

- x est un vecteur d'état, dans le cas de l'alternateur on a $x = [Vs\ \omega\ \theta\ efd]^T$ où Vs est la tension statorique, $\omega$ la vitesse de rotation, $\theta$ l'angle total entre la tension du réseau et la force électromotrice, et efd une image du flux magnétique dans l'excitatrice,
- $u_m$ est un vecteur d'entrée, dans le cas de l'alternateur on a $u_m = [u\ Pmec]^T$ où u est un paramètre de commande, et Pmec la puissance mécanique communiquée au rotor, traitée comme perturbation principale,
- y le vecteur de sorties, dans le cas de l'alternateur on a $y = [Vs\ \omega\ Pe\ Pmec]^T$ où Pe est la puissance active électrique fournie.

La notation $[...]^T$ désigne ici l'opération transposition, les vecteurs étant utilisés sous forme de vecteurs verticaux dans les formules.

Un modèle est donc caractérisé par la donnée de quatre matrices Am, Bm, Cm, Dm.

Les valeurs des différents paramètres sont choisies de sorte à modéliser au mieux le système autour d'un point de fonctionnement donné. Ce point de fonctionnement est en général celui autour duquel le concepteur souhaite doter le système à réguler de propriétés de stabilité. Par exemple, c'est dans le cas du générateur de courant alternatif le point d'un fonctionnement normal.

Am, Bm, Cm et Dm sont des matrices, choisies invariantes dans le cadre d'un modèle linéaire invariant. Ce modèle linéaire invariant fournit une première approximation aisément manipulable qui modélise le système autour du point de fonctionnement dans un voisinage plus ou moins important selon la tolérance désirée. Ce modèle est généralement l'approximation linéaire au premier ordre de la fonction de transfert décrivant l'évolution réelle du système.

Il est possible de faire intervenir explicitement le temps ou d'autres paramètres variables dans les valeurs des matrices Am, Bm, Cm et Dm. Dans ce cas les calculs doivent prendre en compte les valeurs des dérivées de ces matrices. Ceci complique rapidement les calculs selon la forme de la dépendance temporelle, mais le procédé dans son ensemble reste inchangé.

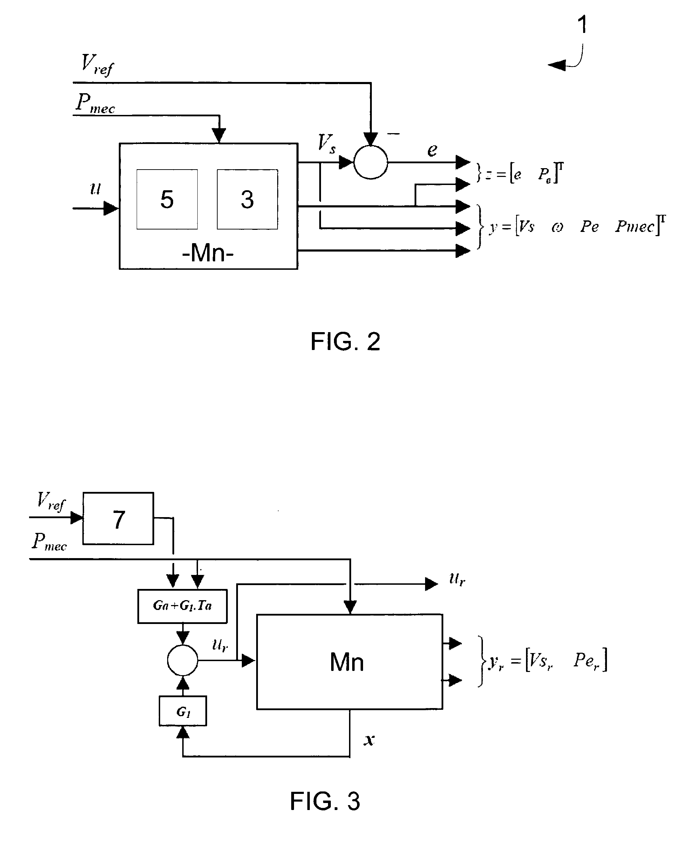

La figure 2 représente sous forme de schéma fonctionnel le système ainsi modélisé.

L'élément central de ce schéma fonctionnel 1 est le modèle nominal Mn, qui comprend l'alternateur 3 et l'excitatrice 5. Le modèle nominal Mn reçoit en entrée la valeur de consigne $V_{ref}$, le paramètre de commande u et la perturbation principale Pmec.

En sortie, le modèle nominal Mn fournit le jeu de grandeurs physiques de sortie, qui comporte la tension statorique Vs, à laquelle est soustraite la valeur de consigne $V_{ref}$, afin d'obtenir l'écart à la consigne e, la puissance électrique Pe et le vecteur $y = [Vs\ \omega\ Pe\ P_{mec}]^T$.

Les valeurs de e et Pe sont regroupées dans un vecteur $z = [e\ Pe]^T$.

Les perturbations sont pour la plupart de nature connue, et inhérentes à la réalisation physique des centrales électriques et des réseaux électriques, et en particulier, au fait que les centrales électriques emploient généralement un certain nombre d'alternateurs en parallèle connectés à un nombre de lignes et de consommateurs variable.

On peut notamment distinguer un certain nombre de perturbations pertinentes, parmi celles-ci :

- le court-circuit triphasé : la tension au réseau chute brutalement à zéro pendant un temps court, de sorte que la seule réactance perçue est celle du transformateur, puis la réactance de la ligne est rétablie,
- le creux de tension : analogue au court-circuit, mais pour une valeur de chute de tension réseau intermédiaire,
- l'îlotage, conséquence d'un court-circuit ou creux de tension prolongé : l'alternateur est déconnecté de tout ou partie du réseau ; dans le cas extrême, il ne fournit la puissance plus qu'à ses auxiliaires pour maintenir son propre fonctionnement,
- la perte d'un groupe voisin : dans le cadre d'une pluralité d'alternateurs en parallèle, la défaillance ou l'arrêt d'un alternateur (groupe) voisin peut entraîner le passage en sous-excitation de l'alternateur considéré,
- la perte d'au moins un groupe voisin à tension basse, entraînant un fonctionnement en limite de surexcitation : suite à l'arrêt d'un ou plusieurs groupes voisins l'alternateur considéré bascule en limitation de courant, et
- la baisse de fréquence, due à la perte d'un site de production de puissance mécanique, qui se traduit par une baisse de fréquence de l'ordre de quelques centaines de mHz en quelques secondes.

Ces perturbations sont représentatives de celles rencontrées dans un réseau réel, et doivent pouvoir être éliminées dans des plages de temps spécifiées dans des cahiers de spécifications techniques.

À l'étape 103 de la figure 1, le modèle nominal est augmenté des modèles prédicteurs choisis nuls sur la consigne et la perturbation principale Pmec. Le jeu d'équation le représentant est alors le suivant :

$$\begin{cases} \dot{\xi}_1 = \mathbf{A}_{11} \cdot \xi_1 + \mathbf{B}_1 \cdot (u - u_a) \\ \dot{\xi}_2 = \mathbf{A}_{22} \cdot \xi_2 \\ y = \mathbf{Cy}_1 \cdot \xi_1 + \mathbf{Dy} \cdot (u - u_a) \\ z = \begin{bmatrix} Vs - Vref \\ Pe \end{bmatrix} = \mathbf{Ce}_1 \cdot \xi_1 + \mathbf{De} \cdot (u - u_a) \end{cases} \quad \text{où} \quad \begin{cases} \xi_1 = x_1 + \mathbf{Ta} \cdot x_2 \\ \xi_2 = x_2 \end{cases}$$

avec $A_{11} = A_m$ , $A_{22} = 0$ , $B_1 = Bm_1$, $Cy_1 = Cm$ , $De = Dy = 0$
et les vecteurs $x_1 = x$ , $x_2 = [Vref \; Pmec]^T$ et $u_n = -Ga \cdot x2$

$Bm_1$ étant la sous-matrice de Bm supérieure de taille appropriée. Et Ga un gain déterminé par résolution du problème connu sous le nom de Problème de Régulation avec Stabilité Interne PRSI, dont découle la forme des équations ci-dessus. Cependant, ce gain peut être obtenu par d'autres méthodes connues de rétroaction régulatrice.

Le modèle augmenté est ensuite utilisé à l'étape 105 de la figure 1 pour reconstruire l'état du processus. La reconstruction d'état est usuellement faite à partir d'un estimateur tel qu'un filtre de Kalman. Ici, en revanche, c'est à partir du modèle utilisé et des grandeurs mesurées que l'état est reconstruit. Le procédé utilise donc le modèle nominal, ici le modèle de conception, pour établir des paramètres estimatifs qui serviront de référence. Cette fonction du procédé est donc appelée l'action prédictive « feedforward » ou FFD, pour l'aspect prédicteur qu'elle présente en fournissant des grandeurs de références, par opposition au « feedback », la rétroaction classique.

Grâce au FFD, on s'affranchit des estimateurs d'état. De plus, en ayant placé toutes les grandeurs non-mesurables dans ledit vecteur d'état, on n'effectue plus de calculs sur celles-ci.

À l'étape 107 de la figure 1 un retour optimal est effectué afin de déduire les paramètres de commande de référence permettant d'obtenir dans le cadre du modèle nominal le suivi optimal de la consigne. Le retour linéaire est effectué notamment par optimisation d'un critère intégral, qui peut être dans le cas du générateur de courant alternatif :

$$J = \int_0^\infty \left[ e^T \cdot \mathbf{Sr} \cdot e + (u - u_a)^T \cdot \mathbf{Rr} \cdot (u - u_a) \right] \cdot dt$$

où Sr et Rr sont des matrices de pondérations positives.

Plus particulièrement, il est possible d'appliquer une méthode telle que la méthode de la commande Linéaire Quadratique Gaussienne (LQG) pour effectuer ce retour optimal.

La figure 3 illustre sous forme de schéma bloc le système avec un mode de réalisation de boucle de prédiction FFD.

L'élément central du schéma bloc de la figure 3 est le modèle nominal Mn.

En entrée sont reçues la puissance mécanique Pmec, et la tension de consigne Vref. La tension de consigne Vref est filtrée par un filtre 7 de premier ordre de constante de temps connu Tref, donc de fonction de transfert $(1 + sTref)^{-1}$.

À partir de la tension de consigne filtrée, de la puissance mécanique Pmec et de l'état x du système est déterminée la commande de référence $u_r$. Cette commande de référence $u_r$ est fournie au bloc Mn, qui fournit en sortie le vecteur de sorties de référence $y_r$. Ce vecteur de sorties de référence, ou estimatif comporte dans le cas de l'alternateur une tension statorique de référence $Vs_r$ et une puissance électrique de référence $Pe_r$.

En sortie de la boucle de prédiction on obtient le jeu de grandeurs estimatif de référence, composé de la commande de référence $u_r$ et du vecteur de sorties de référence $y_r$.

On peut voir sur ladite figure 3 que le retour optimal utilisé pour obtenir la commande de référence est de la forme [G1 ; Ga+GI.Ta]. Le gain G1 est obtenu par optimisation du critère intégral sur la base d'un horizon de commande Tr selon une méthode usuelle. Ga et Ta sont eux obtenus lors de la résolution classique du problème PRSI, Ta étant l'horizon d'intégration pour la détermination de Ga. Le gain total du retour optimal utilisé est la somme de ces deux termes.

Au moins un des paramètres des grandeurs de référence $u_r$ et $y_r$ sont ensuite utilisées dans une rétroaction (« feedback, FBK ») pour déterminer un écart au modèle nominal. Pour ce faire, les écarts entre au moins un des paramètres caractéristiques de sortie mesurés y et au moins un des paramètres caractéristiques estimatifs de sortie $y_r$ sont déterminés, et on applique ou modifie au moins un paramètre de commande u du système en fonction des écarts déterminés pour diminuer l'écart entre les paramètres caractéristiques estimatifs $y_r$ et les valeurs mesurées des paramètres caractéristiques mesurables y.

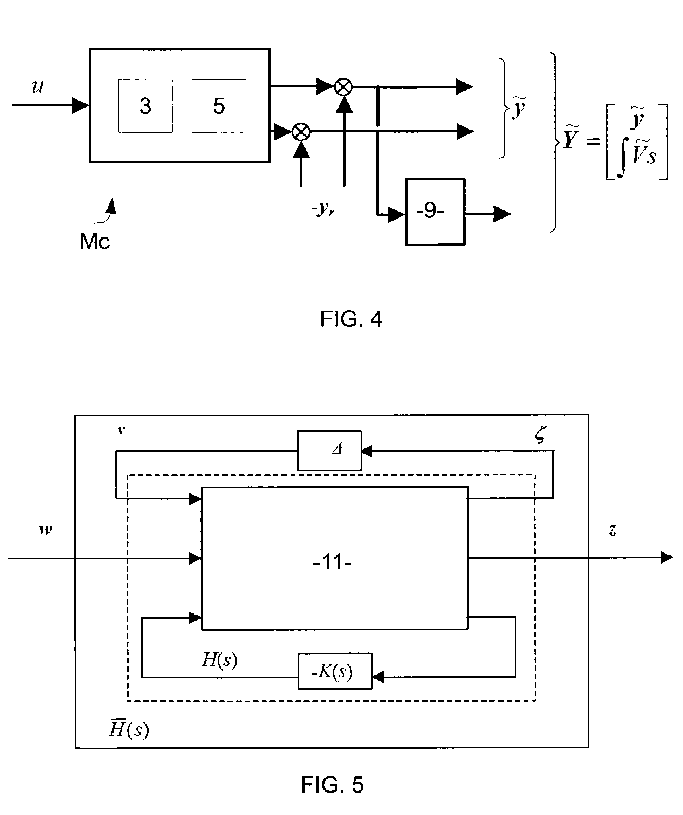

Pour réaliser cette rétroaction FBK on définit d'abord un modèle dit de conception Mc, illustré en figure 4.

Le bloc central de ce schéma est le bloc groupant l'alternateur 3 et l'excitatrice 5, cette fois-ci sous leur forme réelle. Ce bloc reçoit en entrée la commande réelle u et fournit en sortie le vecteur de grandeurs de sorties y, auquel est retranché le vecteur de sorties de références $y_r$, afin d'obtenir un vecteur d'écart des sorties à la référence $\tilde{y}$ = [Vs-$Vs_r$ Pe-$Pe_r$]. Ce vecteur $\tilde{y}$ est augmenté en un vecteur $\tilde{Y}$ par addition de la valeur intégrale de Vs-$Vs_r$, par prélèvement de Vs-$Vs_r$ et passage par un intégrateur 9.

Le modèle standard associé au processus augmenté se met sous la forme :

$$\begin{cases} \begin{bmatrix} \dot{x} \\ \frac{d}{dt} \int Vs \end{bmatrix} = \begin{bmatrix} Am & 0 \\ E \cdot Cm & 0 \end{bmatrix} \cdot \begin{bmatrix} x \\ \int Vs \end{bmatrix} + \begin{bmatrix} Bm_1 \\ 0 \end{bmatrix} \cdot u \\ Y = \begin{bmatrix} y \\ \int Vs \end{bmatrix} = \begin{bmatrix} Cm & 0 \\ 0 & 1 \end{bmatrix} \begin{bmatrix} x \\ \int Vs \end{bmatrix} + \begin{bmatrix} Dm_1 \\ 0 \end{bmatrix} \cdot u \end{cases}$$

où E est une matrice qui permet de sélectionner le paramètre de sortie sur lequel on veut introduire une action intégrale.

Enfin, le modèle de conception est choisi en un point de fonctionnement du processus qui peut être le même que celui du FFD.

La résolution du problème d'optimisation du système de conception au point de fonctionnement est ensuite effectuée.

Par exemple, la résolution peut se faire au moyen d'un régulateur de type commande LQG/LTR dual connu.

Le régulateur présente alors deux fonctions distinctes : une fonction de reconstruction de l'état augmenté de l'intégrale de la tension en sortie, et un retour linéaire optimal sur l'état augmenté reconstruit.

L'invention prévoit d'améliorer encore la robustesse de la commande fournie par désensibilisation. Pour ce faire, le procédé est modélisé autour du point de fonctionnement nominal choisi comme suit :

$$\begin{cases} \dot{x} = A_N \cdot x + B_N \cdot u + \begin{bmatrix} Qo^{1/2} & 0 \end{bmatrix} \cdot w \\ y = C_N \cdot x + D_N \cdot u + \begin{bmatrix} 0 & Ro^{1/2} \end{bmatrix} \cdot w \end{cases}$$

Avec w un bruit blanc gaussien retranscrivant les bruits d'état et de mesure.

Le modèle nominal est complété à l'étape 109 de la figure 1 d'un jeu de K modèles {$M_i$}, sélectionné représentatif des variations possibles de l'état du système. Rigoureusement sélectionnés, ces modèles forment une « base » des variations.

L'écart entre un modèle quelconque du jeu $M_k$ et le modèle nominal $M_N$ est alors paramétré par la projection de la différence M-$M_N$ sur les écarts entre les modèles du jeu {Mi} et le modèle nominal $M_N$ :

$$M_k - M_N = \Sigma \delta_{ik}(M_i - M_N)$$

avec $\delta_{ik}$ variant de 0 à 1 un paramètre normé.

On peut alors définir la réalisation des paramètres $\delta$ qui est :

$$\Delta = [\delta_{ik}]_{i=1,\ldots,m\,;\,k=1,\ldots,K}$$

En particulier, on limite le nombre de paramètres $\delta_i$ à m le nombre de paramètres réels sous-jacents. On peut alors obtenir le jeu d'équations suivant pour décrire l'évolution du système :

$$\begin{cases} \dot{x} = A_N \cdot x + B_N \cdot u + \begin{bmatrix} Qo^{1/2} & 0 \end{bmatrix} \cdot w + \begin{bmatrix} \Phi_{A_1} & \Phi_{B_1} & \dots & \Phi_{A_m} & \Phi_{B_m} \end{bmatrix} \cdot v \\ y = C_N \cdot x + D_N \cdot u + \begin{bmatrix} 0 & Ro^{1/2} \end{bmatrix} \cdot w + \begin{bmatrix} \Phi_{C_1} & \Phi_{D_1} & \dots & \Phi_{C_m} & \Phi_{D_m} \end{bmatrix} \cdot v \end{cases}$$

où $\Phi_{A_1} = A_1 - A_N , \dots, \Phi_{B_1} = B_1 - B_N , \dots, \Phi_{C_1} = C_1 - C_N , \dots, \Phi_{D_1} = D_1 - D_N ,$

$$v = \Delta \cdot \zeta , \quad \zeta = \begin{bmatrix} I \\ 0 \\ M \\ I \\ 0 \end{bmatrix} \cdot x + \begin{bmatrix} 0 \\ I \\ M \\ 0 \\ I \end{bmatrix} \cdot u ,$$

et où

$$\Delta = \begin{bmatrix} \delta_1 \cdot I & & 0 \\ & \dots & \\ 0 & & \delta_m \cdot I \end{bmatrix}$$

Dès lors, l'évolution du système est caractérisée par un jeu d'équations représenté sous forme de schéma bloc en figure 5.

Sur cette figure, le bloc central 11 représente le système standard, caractérisé par Am, Bm, Cm, Dm, $Q_0$, $R_0$ et le jeu de modèles $\{M_k\}$.

Les incertitudes son reportées dans une boucle extérieure, de gain $\Delta$.

La détermination de la commande optimale à $\Delta$ fixé est faite par le biais de la boucle de gain -*K*(s).

On définit alors deux systèmes. Le premier H(s) englobe le système standard 1 1 et la boucle de gain -K(s). Le second H(s) comprend le système H(s) et la boucle de gain $\Delta$.

Le système H(s) reçoit en entrée w et v, et fournit en sortie $\zeta$ et z. $\zeta$ est envoyé vers la boucle de gain $\Delta$ pour obtenir v (voir équations ci-dessus).

En définissant $H_{\zeta v}$, $H_{\zeta w}$, $H_{zv}$,., et $H_{zw}$, les sous matrices dépendantes de K(s) de la fonction de transfert H(s) on a alors la réalisation suivante :

$$\begin{bmatrix} \zeta \\ z \end{bmatrix} = \begin{bmatrix} H_{\zeta v} & H_{\zeta w} \\ H_{zv} & H_{zw} \end{bmatrix} \begin{bmatrix} v \\ w \end{bmatrix}$$

Ceci se traduit sur le système complet H(s) par :

$$H = H_{zw} + H_{zv}\Delta^{1/2}(I-\Delta^{1/2}H_{\zeta v}\Delta^{1/2})^{-1}\Delta^{1/2} H_{\zeta w}$$

En admettant que $\|\Delta\| < \sigma$, où $\sigma$ est un paramètre de réglage arbitrairement petit et $\|.\|$ une norme (norme 2 ou infinie par exemple), on peut procéder à un développement en séries de Taylor de la fonction de transfert H.

On a alors $H \approx H_{zw} + H_{zv}\Delta H_{\zeta w} + H_{zv}\Delta H_{\zeta v}\Delta H_{\zeta w}$

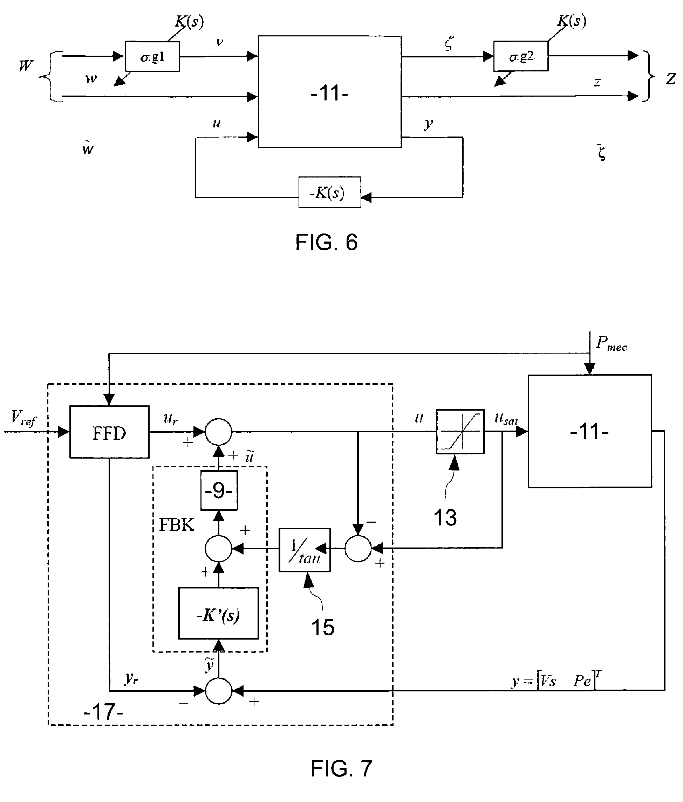

En introduisant $\tilde{w}$ et $\tilde{\zeta}$ les vecteurs reconstruits, dans ce cas particulier grâce au prédicteur FFD précédemment décrit, on construit le processus à optimiser, représenté sous forme de schéma bloc en figure 6. Il est aussi possible d'utiliser un état reconstruit obtenu selon une autre méthode, par exemple au moyen d'un estimateur de Kalman.

Ce système augmenté reçoit en entrée w et $\tilde{w}$, regroupés dans un vecteur W, séparément sur deux lignes parallèles. $\tilde{w}$ est multiplié par $\sigma H_{\zeta w}$. Pour obtenir v. w et v sont amenés au bloc central qui représente le système 11. En sortie du bloc-système 11, on trouve $\zeta$ et z. $\zeta$ est multiplié par $\sigma H_{zv}$ pour obtenir $\overline{\xi}$, regroupé avec z dans un unique vecteur de sortie Z.

Le système augmenté comporte aussi la boucle de rétroaction de gain -K(s) qui raccorde la sortie y à l'entrée $u$ du bloc-système 11.

En partant du régulateur non désensibilisé, dans lequel on a un gain de la boucle de rétroaction valant $K_0$, puis on procède à l'optimisation du système H portant sur $\Delta$ à K(s) fixé valant $K_0$. On obtient ainsi un nouveau système 11 à optimiser en terme de $K$(s) pour déterminer un nouveau gain de cette boucle, $K_1$. Avec ce nouveau gain $K_1$ un nouveau système 11 est établi par optimisation portant sur $\Delta$. Ces dernières étapes sont alors répétées. Les $\delta_{ik}$ sont autant de paramètres d'ajustement supplémentaires. Ils peuvent donc être seulement partiellement ajustés lors des étapes d'optimisation. Le choix des $\delta_{ik}$ qui seront modifiés dépendra essentiellement de la forme des modèles choisis.

$H_{\zeta w}$, et $H_{zv}$ dépendent de la valeur de K(s), de sorte qu'à chaque itération la dimension de $K$(s) augmente. Pour éviter ceci, il est possible, avec une deuxième approximation, de remplacer $H_{\zeta w}$ et $H_{zv}$ par des gains statiques $g_1$, $g_2$, par majoration de $\|H\|$ en utilisant $\sigma$.

On obtient ainsi une boucle itérative, qui peut être répétée jusqu'à satisfaction d'une condition de convergence. En pratique, le nombre de cinq répétitions s'est avéré suffisant dans la majorité des cas, de sorte qu'un nombre de répétitions fixe fournit un résultat acceptable.

La figure 7 illustre sous forme de schéma fonctionnel un mode de réalisation d'un régulateur d'un système alternateur 3, excitatrice 5 tel que précédemment décrit, comprenant en outre une fonction de désaturation.

En effet, la machine réelle ne possède qu'une plage de commande u bornée. Le fait que la commande soit bornée est dû à la réalisation technique du système, et la valeur de la borne dépend du mode de réalisation.

En figure 7, le schéma comprend ledit système 11 avec fonction de désensibilisation, le bloc prédicteur FFD, la fonction de rétroaction FBK et un bloc supplémentaire 13 rendant compte de la saturation de la commande u.

Le bloc FFD reçoit la perturbation principale Pmec et la tension de référence $V_{ref}$ et fournit en sortie les grandeurs de référence $u_r$, $y_r$.

Le bloc FBK reçoit en entrée la différence entre la sortie du bloc système 11 et la sortie de référence $y_r$, et avec un gain de rétroaction -K'(s) permet d'obtenir le précurseur de commande u, auquel est ajouté la commande de référence $u_r$ pour obtenir la commande u, qui après passage dans le bloc supplémentaire de saturation 13 donne la commande saturée $u_{sat}$ qui est fournie au système 11.

Le précurseur de commande u est obtenu en utilisant en outre un intégrateur de désaturation 15, de gain *1/tau* qui intègre la différence entre la commande u et la commande saturée $u_{sat}$.

En particulier, il convient de noter que l'intégrateur 9 est placé dans le bloc FBK, près de sa sortie, ce qui correspond à un changement de variable par rapport au FBK précédemment décrit.

Le régulateur ainsi obtenu a montré lors de simulations des résultats intéressant concernant la levée des perturbations précédemment mentionnées dans le cadre de simulations portant en particulier sur l'EPR *(European Pressurized water Reactor*, réacteur à eau pressurisé européen) de Flamanville.

En particulier, dans le cas des court-circuits, la puissance est rétablie en moins de dix secondes, tout en permettant le maintien de l'angle total (ce qui assure la stabilité) avec le seul régulateur sur une plage importante de points de fonctionnement.

Dans le cas du creux de tension, la tension aux bornes du transformateur relié à l'alternateur reste dans les gabarits imposés par EDF dans la totalité des cas examinés.

Dans le cas de l'îlotage, la tension retourne à moins d'un pour cent unitaire des valeurs finales en moins de dix secondes.

Dans le cas de la chute de fréquence, le retour à un pour cent unitaire la valeur normale est inférieur à 8 secondes, sans que l'écart de tension à la consigne dépasse 4% unitaires.

Les temps de retour, en particulier à 1% de la valeur souhaitée, attestent de l'élimination effective et rapide des oscillations.

Le procédé permet donc de réduire les perturbations sur l'état du système. En approchant l'état réel de l'état idéal, le procédé assure une stabilité au système qui ne dépend plus que de l'exactitude du modèle utilisé et de la précision des mesures.

**Revendications**

1. Procédé de régulation automatique d'un système dans lequel on mesure plusieurs paramètres caractéristiques du système et dans lequel on applique au moins un paramètre de commande (u) en fonction des paramètres mesurés (y), **caractérisé en ce que** :

   - un point de fonctionnement nominal du système est choisi,
   - un modèle nominal (Mn) décrivant le système en ce point de fonctionnement nominal est déterminé, des paramètres caractéristiques estimatifs de sortie ($y_r$) correspondant à des paramètres caractéristiques mesurables (y) sont déterminés à partir dudit modèle nominal,
   - les écarts entre au moins un des paramètres caractéristiques de sortie mesurés (y) et au moins un des paramètres caractéristiques estimatifs de sortie ($_{y_r}$) sont déterminés, et
   - on applique au moins un paramètre de commande du système en fonction des écarts déterminés pour diminuer l'écart entre au moins un des paramètres caractéristiques estimatifs de sortie ($y_r$) et la au moins une valeur mesurée des paramètres caractéristiques mesurés de sortie (y) correspondante.

2. Procédé selon la revendication 1, **caractérisé en ce que** le modèle nominal (Mn) est une approximation (Am, Bm, Cm, Dm) de la fonction de transfert idéale du système.

3. Procédé selon l'une des revendications 1 ou 2, **caractérisé en ce que** le modèle nominal (Mn) est la linéarisation (Am, Bm, Cm, Dm) de la fonction de transfert idéale du système autour d'un point de fonctionnement.

4. Procédé selon l'une des revendications 1 à 3, **caractérisé en ce que** ledit au moins un paramètre de commande du système appliqué en fonction des écarts déterminés pour diminuer l'écart entre les paramètres caractéristiques estimatifs de sortie ($y_r$) et les paramètres caractéristiques mesurés de sortie (y) est déterminé par un retour optimal portant sur un système augmenté dérivé du système initial par ajout de l'intégrale sur au moins un des paramètres caractéristiques de sortie mesurés prédéterminée.

5. Procédé selon l'une des revendications précédentes, **caractérisé en ce que** le paramètre de commande du système appliqué est déterminé par optimisation d'un critère intégral.

6. Procédé selon l'une des revendications précédentes, **caractérisé en ce que** le paramètre de commande du système appliqué est déterminé par la méthode de commande optimale Linéaire Quadratique Gaussienne (LQG).

7. Procédé selon l'une des revendications précédentes, **caractérisé en ce qu'**il comporte en outre les étapes :

   - on détermine un jeu de modèles représentatif ([Mk]) des variations possibles par rapport au modèle nominal (Mn),
   - on effectue une paramétrisation de l'écart au modèle nominal (Mn) du système par décomposition ([$\delta_{ik}$]) sur l'ensemble des écarts entre les modèles du jeu de modèles ([Mk]) représentatif des variations possibles et le modèle nominal (Mn),
   - on minimise un critère d'optimisation (J) donné en variant au moins un des paramètres ([tiki]) de l'écart ($\Delta$) au modèle nominal (M) du système précédemment obtenus.

8. Procédé selon la revendication 7, **caractérisé en ce qu'**il comporte en outre une étape supplémentaire d'optimisation de la commande (u) à écart ($\Delta$) au modèle nominal (M) fixé par détermination d'au moins un gain de rétroaction (-K(s)).

9. Procédé selon l'une des revendications 8, **caractérisé en ce que** les étapes de minimisation du critère d'optimisation (J) en variant les paramètres de l'écart ($\Delta$) au modèle nominal (M) du système et d'optimisation de la commande (u) à écart ($\Delta$) au modèle nominal (M) fixé par détermination d'au moins un gain de rétroaction (-K(s)) sont répétées successivement dans une boucle itérative.

10. Procédé selon l'une des revendications précédentes, **caractérisé en ce qu'**il comporte une étape supplémentaire d'intégration de la différence entre la commande (u) et sa valeur saturée ($u_{sat}$), et **en ce que** le au moins un paramètre de commande du système en fonction des écarts déterminés pour diminuer l'écart entre les paramètres caractéristiques de sortie estimatifs ($y_r$) et les valeurs mesurées des paramètres caractéristiques de sortie mesurables (y) est déterminé en tenant compte de l'intégrale de la différence entre le paramètre de commande (u) et sa valeur saturée ($u_{sat}$).

**11.** Procédé selon l'une des revendications précédentes, **caractérisé en ce que** le système comporte un alternateur (3) de centrale de production d'électricité raccordé à un réseau électrique et son excitatrice.

**12.** Procédé selon la revendication 11, **caractérisé en ce que** l'état du système (3, 5) est représenté par un vecteur d'état (x) qui comporte la tension statorique (Vs), la vitesse de rotation du rotor ($\omega$), l'angle total ($\theta$) et une image du flux dans l'excitatrice (efd).

**13.** Procédé selon la revendication 11 ou 12, **caractérisé en ce que** le jeu de grandeurs de sortie comporte la vitesse de rotation du rotor ($\omega$), la puissance active (Pe) et une valeur approchée de la puissance mécanique (Pmec) modélisant une perturbation principale.

**14.** Procédé selon l'une au moins des revendications 11 à 13, **caractérisé en ce que** ledit au moins un paramètre de commande appliqué comporte une valeur approchée de la puissance mécanique modélisant la perturbation principale (Pmec) et la tension de commande de l'excitation .

**15.** Dispositif de régulation automatique d'un système dans lequel on mesure plusieurs paramètres caractéristiques du système et dans lequel on applique au moins un paramètre de commande en fonction des paramètres mesurés, **caractérisé en ce qu'**il comporte des moyens configurés pour:

- choisir un point de fonctionnement nominal du système,
- déterminer un modèle nominal (Mn) décrivant le système en ce point de fonctionnement nominal,
- déterminer des paramètres caractéristiques estimatifs de sortie ($y_r$) correspondant à des paramètres caractéristiques mesurables de sortie (y) sont déterminés à partir dudit modèle nominal,
- déterminer les écarts entre au moins un des paramètres caractéristiques de sortie mesurés (y) et le au moins un paramètre caractéristique de sortie estimatif correspondant ($y_r$), et
- appliquer au moins un paramètre de commande du système en fonction des écarts déterminés pour diminuer l'écart entre au moins un des paramètres caractéristiques estimatifs de sortie ($_{Y}r$) et la au moins une valeur mesurée des paramètres caractéristiques mesurés de sortie correspondant (u, y).

100

```
        ┌─────────────────┐
        │       101       │
        └─────────────────┘
                 │
        ┌─────────────────┐
        │       103       │
        └─────────────────┘
                 │
        ┌─────────────────┐
        │       105       │
        └─────────────────┘
                 │
        ┌─────────────────┐
        │       107       │
        └─────────────────┘
                 │
        ┌─────────────────┐
        │       109       │
        └─────────────────┘
                 │
        ┌─────────────────┐
        │       111       │◄──────┐
        └─────────────────┘       │
                 │                 │
        ┌─────────────────┐       │
        │       113       │       │
        └─────────────────┘       │
                 │                 │
              ◇ Conv ? ◇───n───────┘
                 │
                 ▼ y
```

FIG. 1

$V_{ref}$

$P_{mec}$

$u$

| 5 | 3 |

-Mn-

$V_s$

$-$

$e$

$\}\, z = [e \quad P_a]^T$

$\}\, y = [Vs \quad \omega \quad Pe \quad Pmec]^T$

FIG. 2

$V_{ref}$

| 7 |

$P_{mec}$

$Ga + G_1.Ta$

$u_r$

$u_r$

$G_1$

Mn

$u_r$

$\}\, y_r = [Vs_r \quad Pe_r]$

$x$

FIG. 3

FIG. 4

FIG. 5

FIG. 6

FIG. 7

Europäisches
Patentamt

European
Patent Office

Office européen
des brevets

## RAPPORT DE RECHERCHE EUROPEENNE

Numéro de la demande

EP 11 29 0333

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/075981 A1 (IWASE NORIAKI [JP] ET AL) 13 avril 2006 (2006-04-13) | 1,2,15 | INV. G05B13/04 |
| Y | * alinéa [0030]; figure 3 * | 6,8 | |
| Y | US 5 374 011 A (LAZARUS KENNETH B [US] ET AL) 20 décembre 1994 (1994-12-20) * colonne 1, ligne 56 - ligne 59 * | 6 | |
| Y | EP 0 389 281 A2 (MATSUSHITA ELECTRIC IND CO LTD [JP]) 26 septembre 1990 (1990-09-26) * colonne 6, ligne 6 - colonne 7, ligne 20 * | 8 | |
| X | US 2004/167657 A1 (SASAKI TAKASHI [JP]) 26 août 2004 (2004-08-26) * alinéa [0046] - alinéa [0048] * | 1,15 | |

DOMAINES TECHNIQUES
RECHERCHES (IPC)

G05B

Le présent rapport a été établi pour toutes les revendications

| Lieu de la recherche | Date d'achèvement de la recherche | Examinateur |
|---|---|---|
| La Haye | 27 février 2012 | Kelperis, K |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 29 0333

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2012

| Document brevet cité<br>au rapport de recherche | | Date de<br>publication | Membre(s) de la<br>famille de brevet(s) | | Date de<br>publication |
|---|---|---|---|---|---|
| US 2006075981 | A1 | 13-04-2006 | CN<br>DE<br>JP<br>US | 1699732 A<br>102005022764 A1<br>2005330856 A<br>2006075981 A1 | 23-11-2005<br>29-12-2005<br>02-12-2005<br>13-04-2006 |
| US 5374011 | A | 20-12-1994 | AUCUN | | |
| EP 0389281 | A2 | 26-09-1990 | EP<br>US | 0389281 A2<br>4998051 A | 26-09-1990<br>05-03-1991 |
| US 2004167657 | A1 | 26-08-2004 | AUCUN | | |

EPO FORM P0460

Pour tout renseignement concernant cette annexe : voir Journal Officiel de l'Office européen des brevets, No.12/82